# NEUE EUROPÄISCHE PATENTSCHRIFT

(11) **EP 0 582 029 B2**
(45) Veröffentlichungstag und Bekanntmachung des Hinweises auf die Entscheidung über den Einspruch: **03.07.2002**
(45) Hinweis auf die Patenterteilung: 05.01.2000
(21) Anmeldenummer: 92890271.7
(22) Anmeldetag: 23.12.1992
(51) Int. Cl.: F16D 1/08

(54) **Klapplager**
Hinged coupling
Accouplement à bascule

(30) Priorität: 05.08.1992 AT 158692
(43) Veröffentlichungstag der Anmeldung: 09.02.1994
(73) Patentinhaber: Schindlecker, Franz, A-2630 Ternitz (AT)
(72) Erfinder: Schindlecker, Franz, A-2630 Ternitz (AT)
(74) Vertreter: Köhler-Pavlik, Johann, Dipl.-Ing.

(56) Entgegenhaltungen:
- EP-A- 0 194 356
- CH-A- 392 193
- DE-A- 3 127 553
- US-A1- 3 246 858

## Beschreibung

Die Erfindung betrifft ein Klapplager nach dem Oberbegriff des Patentanspruches 1.

Ein Klapplager dieser Art ist der CH-PS 392 193 zu entnehmen. Bei diesem Klapplager sind der Aufnahmeteil und der Mitnehmerteil einstückig ausgebildet, wodurch diese Öffnung schwer herstellbar ist. Außerdem ist der Mitnehmerteil an der Antriebswelle durch eine in der Drehachse gelegene Schraube gehalten, wodurch die Biegebeanspruchung dieser Schraube einer höheren Belastung nicht standhält, und der Halt des Aufnahmeteils bei höheren Belastungen unzureichend ist.

Durch die US-PS 3 246 858 ist ein Aufspannfutter bekannt geworden, bei welchem der Aufnahmeteil mit dem Mitnehmerteil der Antriebseinrichtung durch mehrere außerhalb der Drehachse gelegene Schrauben lösbar verbunden ist. Das bekannte Aufspannfutter hat zur Aufgabe, die Gefahr der üblichen Konstruktionen zu vermeiden, bei welchen die Gefahr des Herausfallens schwerer Wellen beim Einspannen derselben verhindert werden soll. Zur Abdeckung der Öffnung des Aufnahmeteiles, in welche der Kupplungszapfen der Wickelwelle einsetzbar ist, sieht die bekannte Konstruktion einen schwenkbaren Hebel vor, welcher am festen Rahmen gelagert ist und die Öffnung des Futters durch eine Hülse abdeckt, welche mit dem Hebel durch einen Kupplungsteil verbunden ist, und über die Öffnung des Mitnehmerteiles zum Schließen derselben axial verschoben wird. Zu diesem Zweck ist die Verschubhülse mehrteilig ausgebildet, mit dem Nachteil einer umständlichen und kostenaufwendigen Herstellung und Montage.

Aufgabe der Erfindung ist die Schaffung von Maßnahmen, durch welche unter Vermeidung des Nachteiles des erstgenannten Klapplagers eine leichtere Herstellung der Kupplungsöffnung.

Gegenüber dem an zweiter Stelle genannten Futter soll ein Klapplager hergestellt werden, bei welchem die Öffnung des Mitnehmerteiles durch ein sich mitdrehendes Handrad ohne Zwischenteile verschließbar ist, wodurch gegenüber der bekannten Konstruktion Herstellungs- und Montagearbeiten wesentlich leichter zu bewerkstelligen sind.

Diese Aufgaben werden durch die Merkmale des kennzeichnenden Teiles des Patentanspruches 1 gelöst.

Die Maßnahme nach Anspruch 2 hat für bestimmte Zwecke einen hrstellungs- und montagetechnischen Vorteil.

Um einen Rundlauf des Aufnahmeteiles, insbesondere beim Austausch desselben zu sichern, dient die Maßnahme nach Anspruch 3.

Die Erfindung wird anhand der Zeichnungen näher erläutert, in welchen zwei Ausführungsformen des erfindungsgemäßen Klapplagers dargestellt sind.
Es zeigen
- Fig. 1: eine Seitenansicht des Klapplagers in der Ausführungsform als Flanschlager in geschlossenem Zustand,
- Fig. 2: einen axialen Querschnitt des Flanschlagers nach Fig. 1,
- Fig. 3: eine Seitenansicht des Klapplagers in der Ausführungsform als Stehlager in offenem Zustand,
- Fig. 4: einen axialen Querschnitt des Stehlagers nach Fig. 3, und
- Fig. 5: eine Stirnansicht des Klapplagers in geschlossenem Zustand.

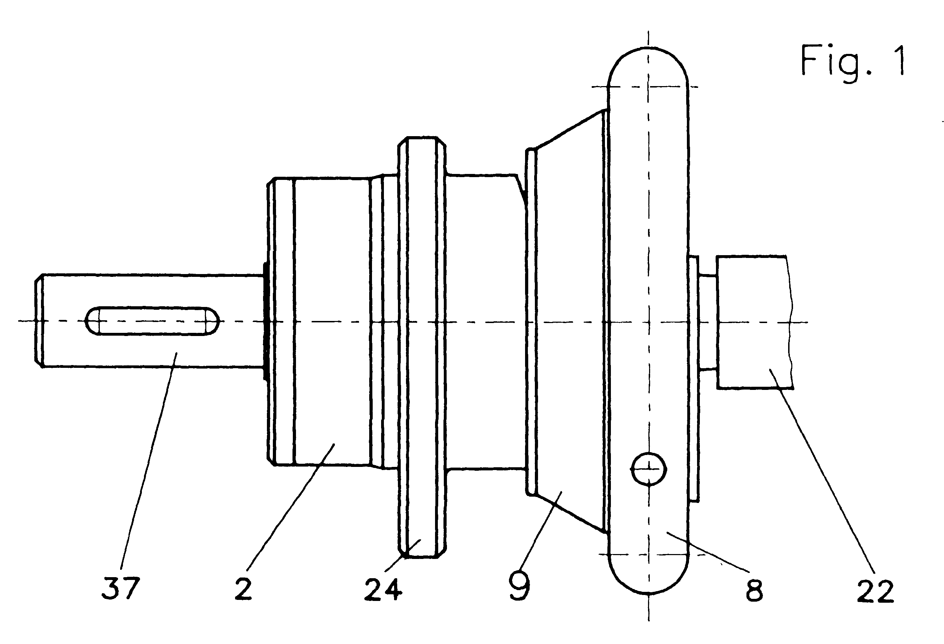

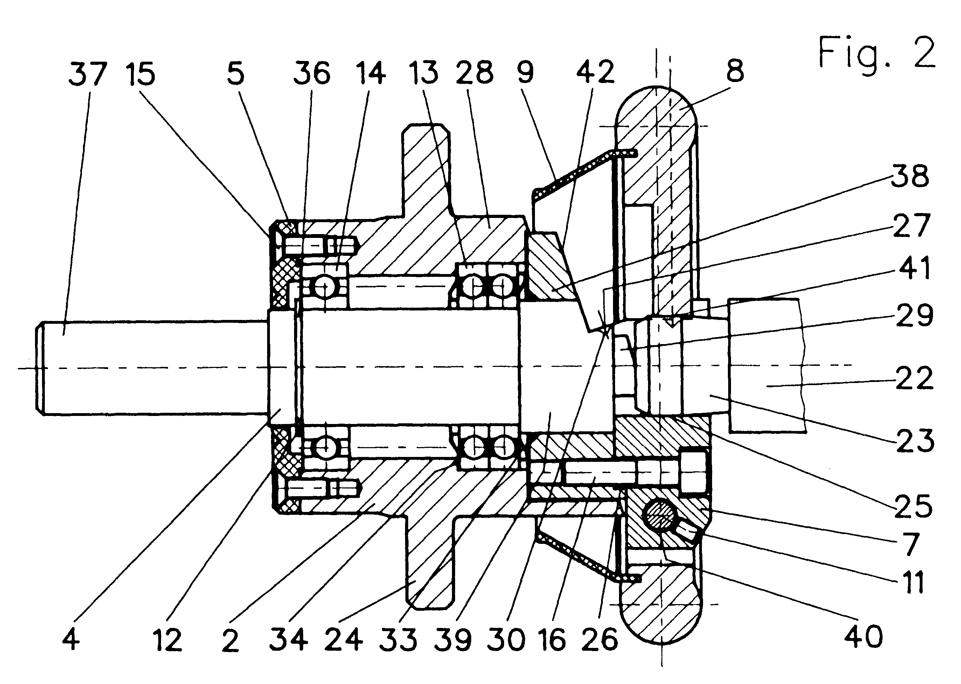

Das Klapplager in der Ausführungsform als Flansch lager nach den Fig. 1 und 2 besitzt ein Flanschlagergehäuse 2, in welchem eine Welle 4 über zwei Vorderlager 13 und ein Hinterlager 14 drehbar gelagert ist. Das Flanschlagergehäuse 2 besitzt einen Flansch 24, mit welchem es an eine nicht dargestellte Wickelmaschine angeflanscht wird. Das hintere Ende des Flanschlagergehäuses 2 ist durch einen Lagerdeckel 5 abgeschlossen, welcher mittels Senkkopfschrauben 15 am Flanschlagergehäuse 2 befestigt ist. Während die vorderen Lager 13 zwischen einem Absatz 33 der Welle 4 und einem Absatz 34 des Flanschlagergehäuses 2 festgehalten sind, sitzt das hintere Lager 14 zwischen einem Absatz 35 des Flanschlagergehäuses 2 und einem Sicherungsring 12, welcher in einer Nut 36 der Welle 4 sitzt. Das aus dem Flanschlagergehäuse 2 nach hinten ausragende Ende 37 der Welle 4 ist an eine nicht dargestellte Mitnehmerwelle einer Wickelmaschine angeschlossen.

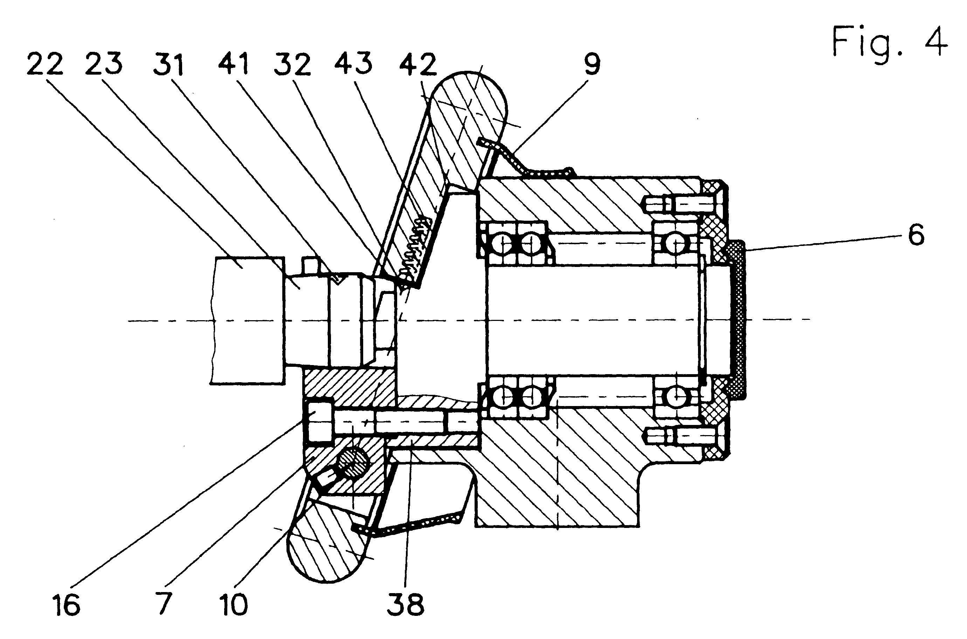

Die Wickelwelle, welche beispielweise zum Auf- oder Abwickeln von bahnförmigen Gut aus Papier, Textilien od.dgl. dient, ist mit 22 bezeichnet. Sie besitzt endseitig einen Zapfen 23, mit welchem die Wickelwelle 22 in eine, wie Fig. 4 zeigt, nach oben offene Öffnung 25 eines Wickelbaumaufnahmeteiles 7 einsetzbar ist, welcher seinerseits mittels Zylinderschrauben 16 an einem Drehteil 38 (Fig.2) befestigt ist, welcher am vorderen Ende 39 der Welle 4 sitzt und mit dieser durch Schweißen verbunden ist. Es besteht auch die Möglichkeit, den Drehteil 38 mit der Welle 4 einstückig auszuführen. Zur Zentrierung des Wickelbaumaufnahmeteiles 7 ist der Drehteil 38 mit einem Absatz 26 versehen, in welchem ein korrespondierender Teil des Wickelbaumaufnahmeteiles 7 sitzt.

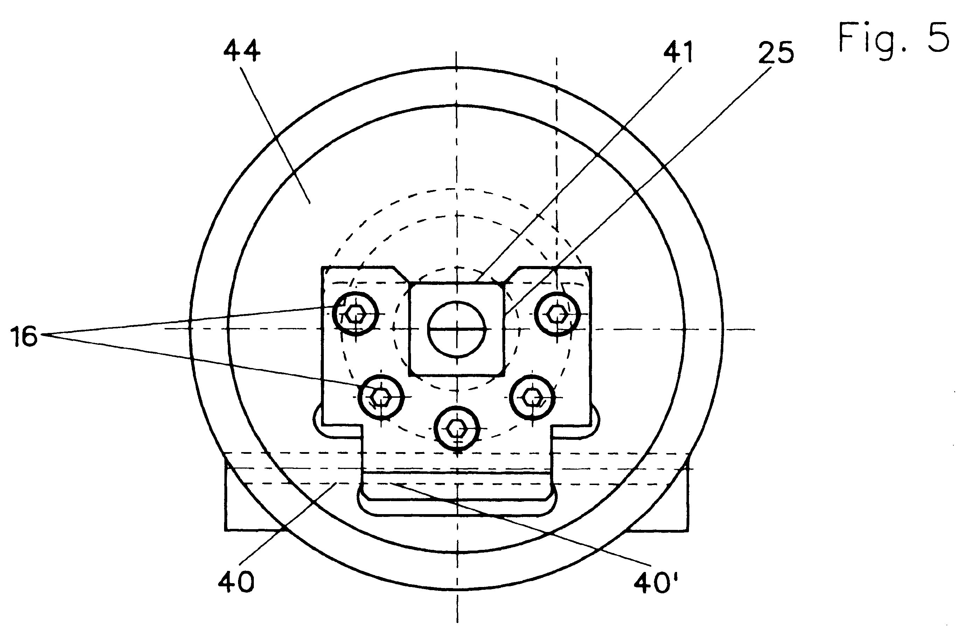

Der Kupplungszapfen 23 der Wickelwelle 22 stößt in seiner Kupplungsstelle an einem Zapfen 29 des vorderen Endes 39 der Welle 4 an und ist unrund, wobei die Öffnung 25 des Wickelbaumaufnahmeteiles 7 der Form des Zapfens 23 angepaßt ist, so daß dieser von der Welle 4 über den Drehteil 38 und den Wickelbaumaufnahmeteil 7 mitgenommen wird. Der Wickelbaumaufnahmeteil 7 dient als Lager für ein schwenkbares Handrad 8, das um einen Bolzen 10 schwenkbar gelagert ist, welcher in fluchtenden Öffnungen 40 bzw. 40' des Handrades 8 und des Wickelbaumaufnahmeteiles 7 gelagert ist. Diese Öffnungen 40 und 40', welche das Handrad 8 und den Wickelbaumaufnahmeteil 7, wie Fig. 5 zeigt, zur Gänze durchsetzen, werden gemeinsam gebohrt, sodaß keine Schwierigkeit beim Einführen der Welle von außen in der Handrad 8 um den Wickelbaumaufnahmeteil 7 besteht. Dies wird durch die leichte und einfache Abnehmbarkeit des Verschleißteiles 7 ermöglicht. Der Schwenkbolzen 10 ist durch einen Gewindestift 11 in seiner Lage gesichert. Das Handrad 8 besitzt in der in Fig. 2 dargestellten Verschlußstellung eine Seite 41, mit welcher die Öffnung 25 an ihrem oberen offenen Ende verschlossen wird. Die Seite 41 ist ebenso wie die Öffnung 25 der äußeren Form des Zapfens 23 angepaßt. Das Handrad 8 kann, wie Fig. 4 zeigt, nach hinten in eine Aussparung 42 geklappt werden, sodaß die Öffnung 25 nach oben freigegeben wird, und die Wickelwelle 22 mit ihrem Zapfen 23 aus der Öffnung 25 herausgehoben werden kann. An seiner Rückseite ist das Handrad 8 mit einem Fingerschutz 9 versehen, welcher, wie Fig. 4 zeigt, beim Zurückklappen des Handrades 8 am Lagergehäuse verformt wird und verhindert, daß die Bedienungsperson unvorsichtigerweise mit ihren Fingern in die bewegten Teile des Klapplagers greifen kann.

Der Wickelbaumaufnahmeteil 7, allenfalls gemeinsam mit dem Handrad 8 oder seinem Innenteil, besteht aus einem verschleißfähigen Material und ist frei von einer allfälligen Auskleidung oder besitzt eine metallische Auskleidung oder ist allenfalls an der Kupplungsfläche gehärtet.

Aus der Fläche 41 des Handrades 8 ragt, wie Fig. 4 zeigt, eine außen abgerundete Rast 32, welche unter der Belastung einer Feder 43 steht, und in der geschlossenen Stellung des Handrades in eine Gegen rast 31 des Zapfens 23 und in der Offenstellung in eine Gegen rast 30 der Aussparung 27 des Wellenendes 39 einrastet und damit das Handrad 8 in den Endstellungen lösbar fixiert. Die Aussparungen 27 und 42 bilden gemeinsam einen Raum, in welchem das Handrad 8, wie Fig. 4 zeigt, in die Offenstellung verschwenkt wird.

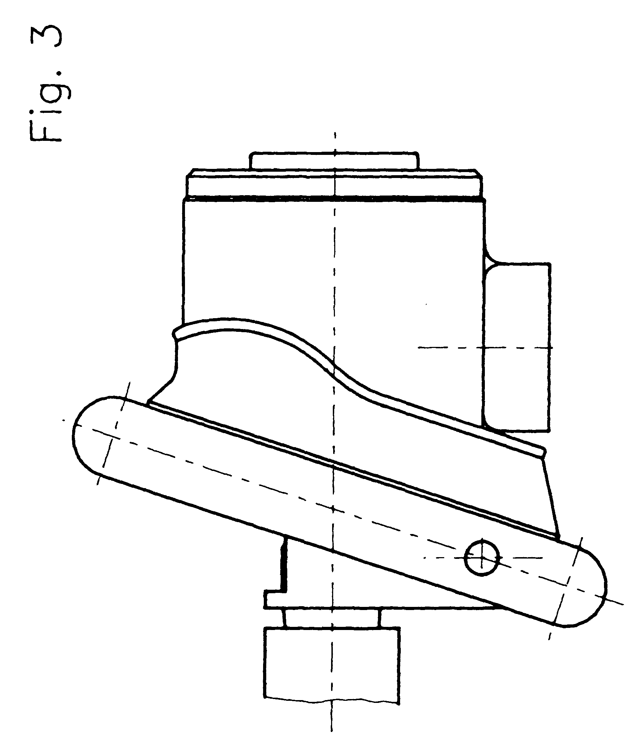

Das Klapplager nach den Fig. 3 und 4 unterscheidet sich vom Klapplager nach den Fig. 1 und 2 lediglich durch die äußere Form des Lagergehäuses, welches in der Ausführungsform nach den Fig. 3 und 4 ein Siehlagergehäuse ist und mit 1 bezeichnet wird. Bei dieser Ausführungsform ist das Stehlagergehäuse 1 an seinem äußeren Ende durch eine Lagerabdeckung 6 verschlossen.

Das Klapplager nach den Fig. 1 und 2 wird am antriebsseitigen und das Klapplager nach den Fig. 3 und 4 am anderen Ende der Wickelwelle 22 angeordnet.

Ein besonderer Vorteil der erfindungsgemäßen Konstruktion besteht darin, daß bei Abnützung des Wickelbaumaufnahmeteiles 7 oder bei Bruch des Handrades 8 oder bei gewünschter Änderung der Kupplungsflächen des Zapfens 23 und des Aufnahmeteiles 7 letzterer allenfalls gemeinsam mit dem Handrad 8 ohne besonderen Arbeitsaufwand ausgetauscht werden können, wobei der Innenteil, bestehend aus dem Drehteil 38 und der Welle 3, verbleiben können. Im Rahmen der Erfindung kann die Form der Öffnung 25 und korrespondierende damit des Zapfens 23 beliebig ausgestaltet werden.

Selbstvertändlich ist es im Rahmen der erfindung möglich, das Handrad 8 allein auzutauschen, vor allem dann, wenn mittels Präzisionswerkzeugen das Aufbohren des Handrades zur Aufnahme der Schwenkwelle möglich ist.

## Patentansprüche

1. Klapplager zum Kuppeln einer Welle mit einer Antriebseinrichtung, insbesondere einer Wickelwelle mit einer Mitnehmerwelle einer Wickelmaschine, wobei die Welle einen Kupplungszapfen aufweist, welcher in eine nach oben offene Öffnung (25) eines Aufnahmeteiles der Antriebseinrichtung einsetzbar, welche Öffnung (25) durch ein unmittelbar im Aufnahmeteil (7) schwenkbar gelagertes Handrad (8) verschließbar ist, **dadurch gekennzeichnet, daß** die nach oben offene Öffnung (25) zur Aufnahme des Kupplungszapfens (23) sich durchgehend über die axiale Dicke des Aufnahmeteiles (7) erstreckt und daß der Aufnahmeteil (7) an einem Mitnehmerteil (38) der Antriebseinrichtung durch mehrere außerhalb der Drehachse gelegene Schrauben (16) lösbar befestigt ist, welche in Winkelabständen angeordnet sind.

2. Klapplager nach Anspruch 1, **dadurch gekennzeichnet, daß** der Mitnehmerteil (38) mit der Welle (4) der Antriebseinrichtung einstückig ausgeführt ist.

3. Klapplager nach Anspruch 1, **dadurch gekennzeichnet, daß** der Mitnehmerteil (38) der Antriebseinrichtung mit einem Absatz (26) versehen ist, in welchem ein korrespondierender Teil des Aufnahmeteiles (7) sitzt.

## Claims

1. A hinged coupling for coupling a shaft with an actuating device, in particular a winding shaft with a driving shaft of a winding machine, wherein the shaft comprises a coupling pin capable of being inserted in an upwardly open opening (25) of a reception part of the actuating device, which opening (25) is closeable by a hand wheel (8) pivotably mounted directly in the reception part (7), **characterized in that** the upwardly open opening (25) extends continuously over the axial thickness of the reception part so as to receive the coupling pin and that the reception part (7) is detachably fastened to a driving part (38) of the actuating device by means of several screws (16) located outside the axis of rotation and arranged at angular distances.

2. A hinged coupling according to claim 1, **characterized in that** the driving part (38) is designed in one piece with the shaft (4) of the actuating device.

3. A hinged coupling according to claim 1, **characterized in that** the driving part (38) of the actuating device is provided with a shoulder (26), in which a corresponding part of the reception part (7) is seated.

## Revendications

1. Accouplement à bascule destiné à accoupler un arbre à un organe moteur, en particulier un arbre d'enroulement à un arbre d'entraînement d'une machine d'enroulement, dans lequel l'arbre comprend un pivot d'accouplement capable d'être inséré dans un orifice (25) d'une partie de logement de l'organe moteur, orifice qui est ouvert vers le haut et peutêtre fermé par une roue à main (8) montée d'une manière pivotante directement dans la partie de logement (7), **caractérisé en ce que** l'orifice (25) qui est ouvert vers le haut s'étend pour le longement du pivot d'accouplement d'une façon continue sur l'épaisseur axiale de la partie de longement (7) et **en ce que** la partie de logement (7) est fixée d'une manière amovible à une partie d'entraînement (38) de l'organe moteur au moyen de plusieurs vis (16) situées à l'extérieur de l'axe de rotation et aménagées à des distances angulaires.

2. Accouplement à bascule selon la revendication 1, **caractérisé en ce que** la partie d'entraînement (38) est formée d'une seule pièce avec l'arbre (4) de l'organe moteur.

3. Accouplement à bascule selon la revendication 1, **caractérisé en ce que** la partie d'entraînement (38) de l'organe moteur est pourvue d'un épaulement (26), dans lequel est placée une partie correspondante de la partie de logement (7).
